# EUROPEAN PATENT SPECIFICATION

(11) **EP 2 954 966 B1**
(45) Date of publication and mention of the grant of the patent: **05.07.2017**
(21) Application number: 15171928.3
(22) Date of filing: 12.06.2015
(51) Int. Cl.: B23D 61/02, B23C 5/08, B23C 5/28, B28D 1/12, B23P 15/28

(54) **CUTTER DISC, CUTTING DEVICE AND METHOD FOR OBTAINING SUCH A CUTTER DISC**
TRENNSCHEIBE, TRENNVORRICHTUNG UND VERFAHREN ZUR HERSTELLUNG EINER DERARTIGEN TRENNSCHEIBE
DISQUE DE COUPAGE, DISPOSITIF DE COUPAGE ET PROCÉDÉ D'OBTENTION D'UN TEL DISQUE DE COUPAGE

(30) Priority: 13.06.2014 IT PD20140146
(43) Date of publication of application: 16.12.2015
(73) Proprietor: Meccanotecnica Veneta S.r.L., 36065 Mussolente (VI) (IT)
(72) Inventor: BORDIGNON, Diego, I-31037 Castione di Loria (TV) (IT)
(74) Representative: Gallo, Luca

(56) References cited:
- EP-A1- 1 561 534
- GB-A- 632 885
- JP-A- H0 760 650
- US-A- 2 422 404
- US-A1- 2011 073 094
- US-A1- 2013 298 743

## Description

### Field of application

The present invention regards a cutter disc according to the preamble of independent claim 1 and a method for obtaining such a cutter disc.

The cutter disc and the method, object of the present invention, are respectively comprised in the industrial field of mechanical processing of metals, composite materials, polymers, wood or other materials and in the field of production of precision tools.

The cutter disc according to the present invention is intended to be advantageously employed for precision mechanical processing, for example in the manufacturing fields of gold-working and jewelry production, watch-making, eyeglass-making and for producing metal accessories.

### State of the art

As is known, cutter discs are employed in numerous manufacturing fields, for the cold mechanical processing of pieces constituted by materials that can have physical and mechanical characteristics even quite different from each other, such as wood, metal materials, polymer materials or composites.

For such purpose, cutter discs are available on the market that are made of different materials, possibly provided with suitable coatings in order to allow, as a function of the specific material that the cutters are intended to process, an optimal finishing and a suitable processing speed as well as ensure a good duration of the tool.

For metal processing, cutters made of so-called hard metals have been considerably diffused in recent decades; such hard metals include carbide powders, such as in particular tungsten carbide, bound by a metal matrix, usually cobalt.

The hard metal has a greater hardness than other materials usually employed for making cutters, such as high-speed steel, and allows higher processing speeds since it resists higher cutting temperatures.

Conventionally, the cutter discs comprise a disc-shaped support body provided with a central through hole, for the engagement of the cutter with the chuck of a machine tool, and with an outer perimeter edge, along which a plurality of teeth are obtained spaced from each other, which jointly define the cutting edge of the cutter.

In order to improve the efficiency and duration of the cutter discs, along with the cutting tools in general, it is known to spray the cutters themselves and possibly the cutting surface with coolant-lubricant fluids. The flow of coolant-lubricant fluid, in addition to cooling the cutter and the cutting surface of the material, in fact facilitates the removal of the chips and hence the advancement of the tool in the material subject to processing.

Nevertheless, the coolant-lubricant fluid distributed on the cutter has a hard time reaching the cutting edge of the latter and hence effectively cool the zones of the tool and piece to be processed that are more subjected to heating.

In order to facilitate an improved distribution of the coolant-lubricant fluid towards the cutting zone, disc-shaped cutting tools were designed; these are provided on the main faces thereof with a plurality of radial grooves, adapted to receive the cooling fluid at their interior and to guide it, due to the centrifugal force imparted thereon during tool operation, towards the cutting edge.

One example of a cutting tool of the latter known type is reported in the patent US 4,624,237. Such patent describes a diamond circular saw, which comprises a disc-shaped support body, in particular made of steel, whose outer perimeter edge bears, fixed thereon, an abrasive paste comprising diamond powders.

The support body is provided with two opposite faces, a plurality of elongated grooves being obtained on a peripheral portion thereof which extends from the outer perimeter edge of the support body towards the center thereof; such grooves extend substantially in radial direction. In particular, in accordance with an advantageous embodiment of the circular saw, the elongated grooves have a curved extension.

The solution proposed in the patent US 4,624,237 for circular saws, would however be poorly adapted for being used to facilitate the cooling of the cutting edge of a cutter disc.

The radial grooves obtained on the faces of the support body in fact facilitate the distribution of the coolant-lubricant fluid towards discrete portions of the cutting edge of the tool, and therefore they would be able to ensure the suitable cooling-lubrication of each of the teeth of the cutting edge of a cutter disc only for a pre-established number and arrangement of the teeth of the cutting edge along the outer perimeter edge of the support body.

In addition, if the grooves have a curved form, the support body has a preferred rotation direction, so that the teeth must be obtained along the outer perimeter edge of the support body in accordance with the aforesaid preferred rotation direction of the latter.

Hence, this involves a production process that is more expensive and time-consuming. The patent JP H0760650 describes a cutter disc of known type, according to the preamble of independent claim 1, which comprises a disc-shaped metal support body and a plurality of teeth fixed along the outer perimeter edge of the support body itself.

In addition, the cutter comprises a layer of abrasive material granules, such as diamond granules, deposited on the lateral faces of the support body by means of electro-deposition. Such abrasive material layer develops a reduced friction coefficient, generating a low noise level during the cutting operations executed by means of the cutter disc.

The latter solution of known type described in the patent JP H0760650 does not at all resolve the problem of the high overheating of the cutter, in particular at the cutting edge of the cutter itself.

In addition, the deposit of the abrasive material layer on the lateral faces of the support body of the cutter disc requires the actuation of specific operative steps with appropriate instruments, involving high costs and long times for obtaining the cutter disc itself.

### Presentation of the invention

The problem underlying the present invention is therefore that of overcoming the drawbacks manifested by the abovementioned solutions of known type, by providing a cutter disc with greater efficiency than the cutter discs currently available on the market. Such a disc is provided by the cutter disc of independent claim 1. A further object of the present invention is to provide a cutter disc, which allows, during the operation thereof, to efficiently supply towards the cutting edge thereof a cooling liquid that is released on the faces thereof.

Another object of the present invention is to provide a cutter disc, which substantially maintains its functional characteristics unaltered, even after sharpening.

A further object of the present invention is to provide a cutter disc, which can be simply and inexpensively made in multiple variants, equipped with a different number of teeth and with a different spacing between the teeth.

Another object of the present invention is to provide a cutter disc with optimal mechanical characteristics.

A further object of the present invention is to provide a process for obtaining a cutter disc, which is simple and inexpensive to obtain. Such a process is provided by the method of independent claim 11.

### Brief description of the drawings

The technical characteristics of the invention, according to the aforesaid objects, can be clearly found in the below-reported contents of the claims and the advantages thereof will be clearer in the following detailed description, made with reference to the enclosed drawings, which represent several merely exemplifying and non-limiting embodiments of the invention, in which:
- figure 1 shows a perspective view of a support body of a cutter disc according to the present invention, in accordance with a first embodiment;
- figure 2 shows a plan view of a cutter disc according to the present invention, in accordance with a second embodiment;
- figure 3 shows a section view of the cutter disc of figure 2, made along the line III-III of the same figure;
- figures 4A and 4B show an enlarged detail of the cutter disc of figure 2 relative to provided teeth of the cutter in accordance with two possible embodiment variants thereof;
- figure 5 shows an enlarged detail of an image of a cutter in accordance with the second embodiment illustrated in Figure 2, relative to the teeth of the cutter;
- figure 6 shows an image of an enlarged detail of a face of a cutter disc according to the present invention;

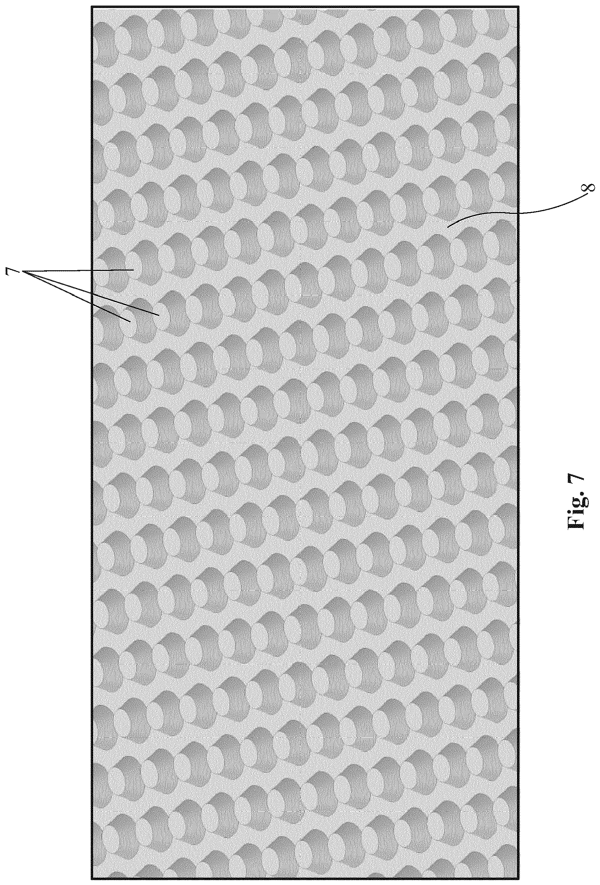

- figure 7 shows a perspective view of an enlarged detail of a face of a cutter disc according to the present invention;
- figure 8 shows an operative head of a cutting device equipped with the cutter disc, object of the present invention;
- figure 9 shows a graph that represents the evolution of the average temperature of the cooling fluid, simulated during the operation of a cutter of known type and during the operation of the present cutter disc 1, along the radial extension of the support body of each of the aforesaid cutters;
- figure 10 shows a graph that represents the statistical distribution of the temperature values of the cooling fluid calculated on the lateral surface of the teeth of a cutter of known type and of the present cutter disc 1.

### Detailed description

With reference to the enclosed drawings, reference number 1 indicates a cutter disc, object of the present invention, in its entirety.

The present cutter disc 1 is intended to be advantageously employed, in a *per se* known manner, for the cold mechanical processing of mainly mechanical pieces, and it was designed for processing pieces made of metal; nevertheless, it can also be employed for processing pieces made of different materials, such as in particular composite materials or polymer materials, or even made of wood, without departing from the protective scope defined by the present patent.

The cutter disc 1 according to the present invention is in particular intended to be mounted on a chuck of a tool-holder in order to be driven by the latter to rotate around an axis thereof.

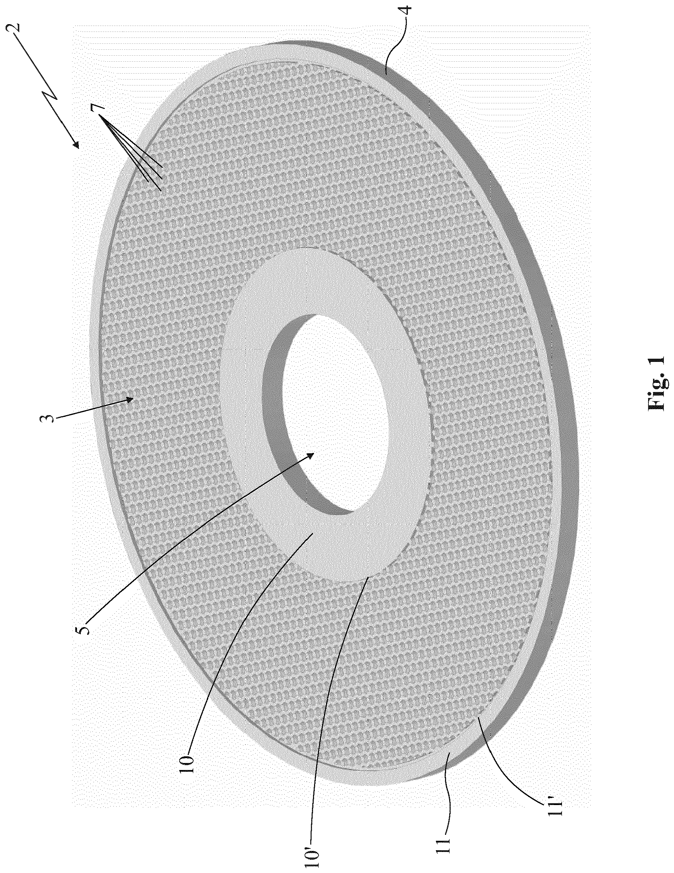

The present cutter disc 1 comprises a disc-shaped support body 2, illustrated in a possible embodiment thereof in Figure 1, which is equipped with two substantially opposite faces 3.

The two faces 3 are delimited peripherally by an outer perimeter edge 4 and centrally by a through hole 5 for coupling with a chuck of a tool-holder, as specified above.

Preferably, the support body 2 is made of metal material, in particular hard metal such as tungsten carbide.

Advantageously, the support body 2 has a diameter comprised between about 15 mm and 200 mm, for example about 80 mm, and has a thickness comprised between 0.1 mm and 6 mm, for example about 2 mm.

The cutter disc 1 also comprises a plurality of teeth 6 distributed along the outer perimeter edge 4 of the support body 2.

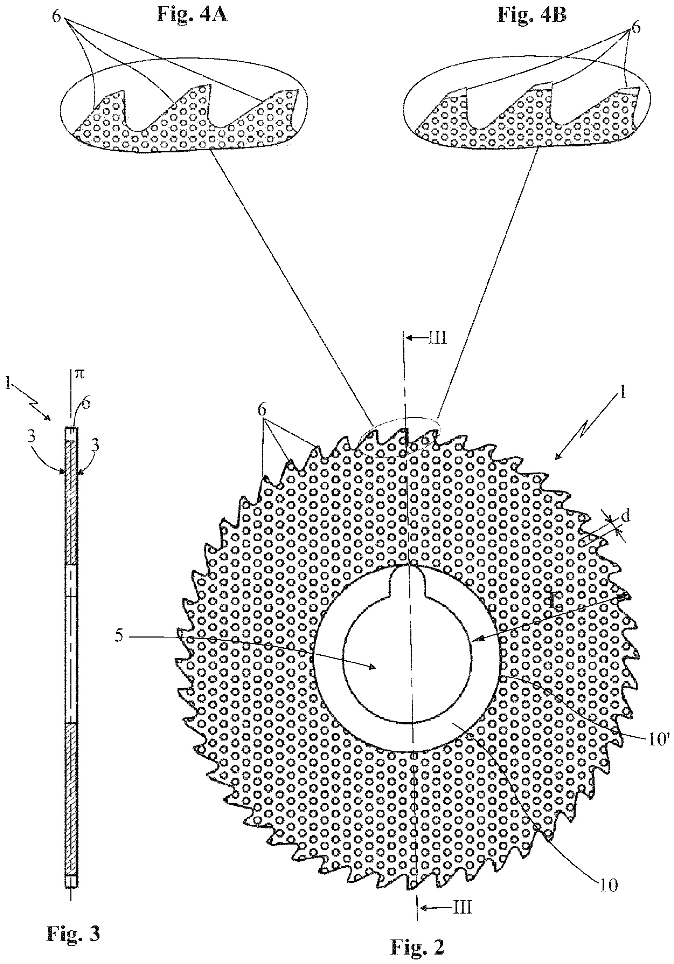

The teeth 6 are advantageously arranged equidistant from each other along the outer perimeter edge 4, as illustrated in the enclosed Figures 2, 4 and 5. Otherwise the teeth 6 can have a different distribution along the outer perimeter edge 4, e.g. with variable pitch, without departing from the protective scope defined by the present patent. By way of example, illustrated in the enclosed Figures 4A and 4B are two possible embodiments of the teeth 6 of a cutter disc 1 according to the present invention, it being intended of course that the teeth 6 can have a shape, i.e. form and geometric characteristics, that are also different from those represented herein, without departing from the protective scope defined by the present patent.

In accordance with the idea underlying the present invention, each of the faces 3 of the support body 2 comprises at least one intermediate area having a plurality of discrete protuberances 7, which are made integral with the support disc 2 and of the same material as the latter.

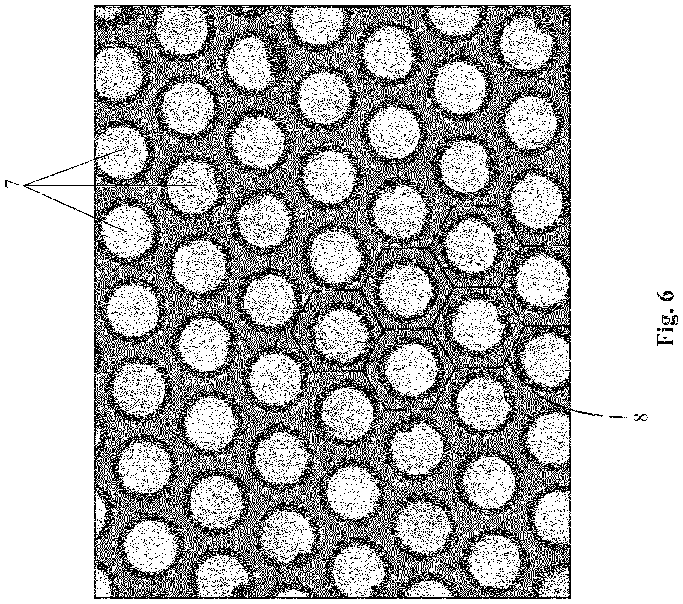

The protuberances 7 are distributed radially and circumferentially on the corresponding lateral face 3 of the support disc 2 and are separated from one another by a recessed network 8 of intercommunicating channels, illustrated with dashed line in Figure 6, which defines a bottom from which the protuberances 7 are projected.

In particular, the protuberances 7 are distributed circumferentially around the through hole 5 of the support body 2, and are distributed radially with respect to the axis of the through hole 5 itself.

The network 8 of channels is capable of guiding a cooling fluid, and in particular a cooling liquid, released on the faces 3 of the support body 2 towards the teeth 6 of the cutter disc 1.

As specified above, in order to facilitate the cooling of a cutter disc 1 during the operation thereof, i.e. during the processing of a piece, the cooling fluid is normally distributed on the cutter 1 itself, in particular the cooling and possibly lubricating liquid, for example water, oil or suitable usually aqueous emulsions. For such purpose, the tool-holder, to which the cutter disc 1 is intended to be coupled, is provided with one or more spray nozzles adapted to direct the cooling fluid towards the cutting edge of the teeth 6 of the cutter 1 or towards the faces 3 of the support body 2 of the cutter 1.

The presence of the protuberances 7 distributed at least on an intermediate area of each face 3 of the support body 2, as better explained hereinbelow, i.e. the presence of the network 8 of communicating channels, allows distributing the cooling fluid in a substantially capillary manner on the faces 3 of the support body 2, thus allowing the cooling fluid, subject to a centrifugal force imparted by the rotating cutter 1, to reach each of the teeth 6, in particular independent of the number of teeth 6 and their distribution along the outer perimeter edge 4.

This therefore ensures an effective cooling of the cutting edge of the cutter disc 1, which is therefore able to ensure improved performances and a greater use duration over time, given that it is characterized by a longer useful lifetime with respect to conventional cutters.

In addition, the protuberances 7 of the cutter disc 1 according to the present invention cause an increase of the convective heat exchange surface area between the support body 2 and the cooling fluid (with respect to the solutions of known type lacking protuberances), further facilitating high cooling performances for the cutter disc 1.

As explained above, such technical advantages are similarly obtainable with cutter discs provided with radial protuberances or grooves, since such radial protuberances or grooves are unable to guide a cooling fluid towards each of the teeth of the cutter regardless of the arrangement and number of such teeth.

The cutter disc 1 according to the present invention is therefore extremely versatile, since it can be provided in multiple variants equipped with a different number of teeth and with a different spacing between the teeth, without this involving the previous obtainment of a support body specifically designed as a function of the aforesaid characteristics of the cutting edge. The support body 2 provided with the protuberances 7 and the network 8 of channels on the faces 3 thereof, in accordance with the present invention, is in fact adapted for obtaining cutters provided with any number and arrangement of the teeth 6.

In addition, the recessed network 8 of communicating channels provides an evacuation path for the chips produced by the cutter 1 during processing.

The network 8 of intercommunicating channels also ensures an optimal distribution of the cooling fluid on the faces 3 of the support body 2 up to the outer perimeter edge 4 of the latter, regardless of the rotation direction of the support body itself 2, so that the teeth 6 can be obtained on the latter with any orientation, without compromising the performance characteristics of the finished cutter 1, hence facilitating and speeding up the process of production of the cutter 1 according to the present invention, as better explained hereinbelow.

Advantageously, each of the faces 3 of the support body 2 is equipped with a central portion 10 that extends radially from the central through hole 5 to a first intermediate limit circumference 10'; such central portion 10 is substantially smooth. On the smooth central portion 10 of each of the faces 3 of the support body 2, the specifications of the corresponding cutter disc can be inscribed, such as the diameter, thickness, type of teeth, producer name, piece code etc.

In accordance with a first embodiment of the support body 2 illustrated in Figure 1, each of the faces 3 of the support body 2 is also equipped with a peripheral portion 11 that extends radially from the outer perimeter edge 4 of the support body 2 to a second intermediate limit circumference 11'; such peripheral portion 11 is substantially smooth.

The faces 3 of the support body 2 in accordance with this first embodiment are provided with the protuberances 7 only at the aforesaid intermediate area, which is comprised between the first limit circumference 10' that delimits the central portion 10 and the second limit circumference 11' that delimits the peripheral portion 11'.

Such first embodiment of the support body 2 allows equipping the cutter 1 with teeth 6 (not illustrated in Figure 1) having geometric and mechanical characteristics entirely identical to the characteristics of the teeth obtained on cutter discs of conventional type having the faces of the support body completely smooth.

In accordance with a second embodiment of the support body 2 illustrated in Figures 2-5, the faces 3 of the support body 2 are not provided with respective smooth peripheral portions and are therefore provided with the protuberances 7 over the entire radial extension thereof comprised between the first intermediate limit circumference 10' and the outer perimeter edge 4.

The cutter discs 1 according to the present invention, having a support body 2 in accordance with the latter embodiment, are provided with teeth 6 having geometric and mechanical characteristics that do not significantly diverge from the characteristics of the teeth 6 made on cutter discs of conventional type having the faces 3 of the support body 2 completely smooth, as better explained hereinbelow. In addition, the latter cutter discs 1 allow maintaining the geometric and mechanical characteristics of the teeth 6 thereof substantially unchanged, even following wear of the teeth initially obtained on the support body 2, and hence following subsequent sharpening of the cutter disc 1.

In particular, the cutter discs 1 having a support body 2 provided with protuberances 7 on the entire radial extension thereof comprised between the first intermediate limit circumference 10' and the outer perimeter edge 4 have in practice proven to be less noisy than the cutter discs 1 provided with protuberances 7 only at the intermediate area.

Advantageously, the protuberances 7 are arranged offset from one another along radial directions to deviate and slow down the flow of the cooling fluid, subject to a centrifugal force, along radial directions, consequently increasing the time the cooling fluid itself stays on the faces 3 of the support body 2.

The protuberances 7, given their arrangement on the faces 3 of the support body 2, are adapted to guide the cooling fluid in the network 8 along a path 9, illustrated with a dashed line in Figure 6, having a plurality of sections 9' with at least one tangential component 9ₜ and a plurality of sections 9" with at least one radial component 9ᵣ.

More in detail, the area of each of the faces 3 of the support body 2 provided with the protuberances 7, i.e. in particular the intermediate area in accordance with the first embodiment of the support body 2 illustrated in Figure 1 or the area comprised between the first intermediate limit circumference 10' and the outer perimeter edge 4 in accordance with the second embodiment of the support body 2 illustrated in Figures 2-5, comprises, along a generic radial direction, a plurality of protuberances 7 offset from one another, so that during the rotation of the cutter disc 1 the cooling fluid, moving under the action of the centrifugal force along the network 8, encounters a plurality of protuberances 7, so as to define a winding path, i.e. a non-linear path. As specified above, this ensures a greater period of contact of the cooling fluid with the faces of the support body 2, preventing the same from being moved outside the faces 3 in a time too brief for allowing an effective heat exchange between the cooling fluid itself and the cutter 1.

Advantageously, if the cutter 1 comprises a support body 2 in accordance with the second embodiment illustrated in Figures 2-5, each of the teeth 6 is equipped, on the lateral surfaces thereof (each of which extended on a respective portion of the corresponding face 3 of the support body 2) with a plurality of the protuberances 7, so that the position of each tooth 6 with respect to the protuberances 7 is substantially unimportant for the distribution of the cooling fluid that is released on the faces 3 of the support body 2 of the cutter 1. The cooling fluid is in any case pushed to reach each of the teeth 6.

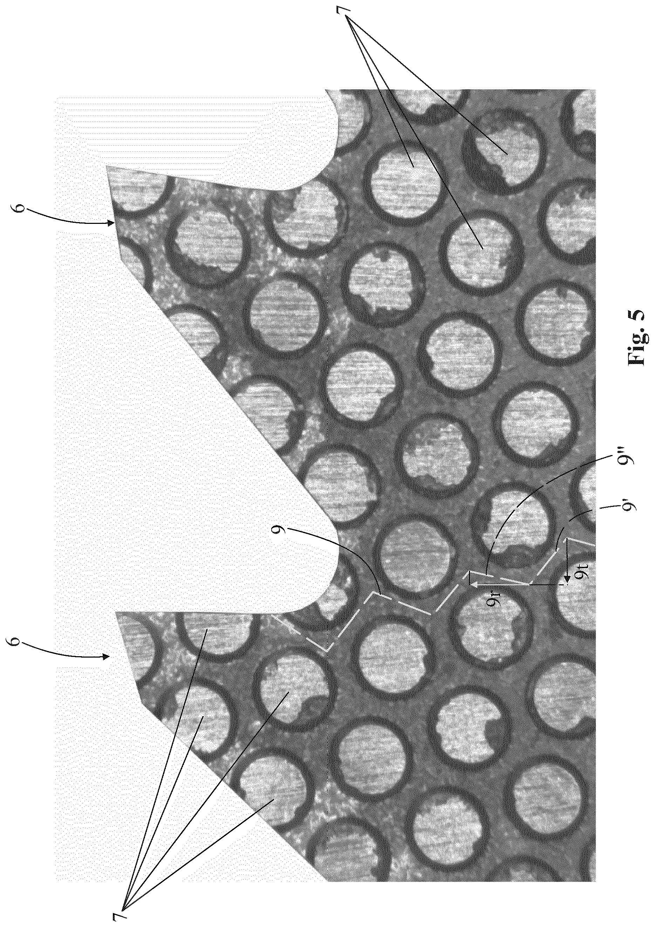

Each of the protuberances 7 for such purpose occupies an extension on the corresponding face 3 of the support body 2 that is advantageously less than 30% and preferably less than 20% of the extension surface of each tooth 6 on the same face 3, as can be appreciated in Figure 5. In particular, the protuberances 7 advantageously have maximum width d much lower than the radial extension L of the support body 2, i.e. in particular at least one order of magnitude less than the aforesaid extension L.

In accordance with a preferred embodiment illustrated in the enclosed figures, the protuberances 7 are regularly spaced from one another.

In addition, the protuberances 7 advantageously have a dense distribution on the corresponding portion of each face 3 of the support body 2.

In accordance with a preferred embodiment, the protuberances 7 occupy a percentage comprised between 30% and 50%, and preferably around 40%, of the extension of the area of each of the faces 3 of the support body 2 provided with the protuberances 7, i.e. in particular of the intermediate area in accordance with the first embodiment of the support body 2 illustrated in Figure 1 or of the area comprised between the first intermediate limit circumference 10' and the outer perimeter edge 4 in accordance with the second embodiment of the support body 2 illustrated in Figures 2-5. The remaining percentage comprised between 50% and 70%, and preferably around 60%, is thus occupied by the recessed network 8 of channels.

Such dense distribution of the protuberances 7 ensures a suitable period of contact of the cooling fluid with the faces 3 of the support body 2, defining a winding path on the faces 3 themselves.

In addition, if the cutter 1 comprises a support body 2 in accordance with the second embodiment illustrated in Figures 2-5, such dense distribution of the protuberances 7 ensures a greater resistant cross section for each of the teeth 6, ensuring optimal mechanical properties for the same, and simultaneously ensures substantial uniformity with regard to the cross sections of the different teeth 6, thus preventing different mechanical behavior of the various teeth 6.

In order to ensure a more uniform cross section over the entire extension of the entire cutter disc 1, the protuberances 7 can be advantageously arranged on the two opposite faces 3 of the support body 2 in offset positions.

Advantageously, each of the protuberances 7 extends from the bottom of the channels of the network 8 along a direction substantially perpendicular to the bottom itself, tapering off. Such tapered extension of each of the protuberances 7 in addition to facilitating the process of obtaining the cutter 1 itself described hereinbelow, also reduces the probability that during the use of the cutter 1 the protuberances 7 may break, when subjected to cutting forces.

In particular, in accordance with a preferred embodiment illustrated in the enclosed figures, each of the protuberances 7 has a frustoconical shape.

The protuberances 7 advantageously all have substantially the same shape and are, in particular, uniformly distributed over the intermediate area, i.e. over the area comprised between the first intermediate limit circumference 10' and the outer perimeter edge 4.

In addition, the protuberances 7 all preferably have substantially the same size. Advantageously, each protuberance has a height comprised between about 0.1 mm and 0.6 mm and preferably about 0.3 mm.

The width of each channel of the network 8, which separates the protuberances 7 from each other, is comprised between about 0.5 mm and 1.5 mm and preferably is about 1.2 mm.

Otherwise, in accordance with a non-illustrated embodiment, the protuberances 7 can have different size, e.g. increasing in radial direction towards the outer perimeter edge 4, or be distributed at a distance between them that can vary radially and/or circumferentially.

According to a preferred embodiment of the support body 2 illustrated in the enclosed figures, the faces 3 of the support body 2 both extend substantially parallel to a reference plane π, as visible in Figure 3. The substantially flat and parallel extension of the faces 3 of the support body 2 ensures that the transverse bulk defined by the cutting edge, i.e. by the set of the teeth 6, of the cutter 1 is substantially equivalent to the transverse bulk defined by the support body 2. The faces 3 of the support body 2 are therefore able to slide against the cutting surfaces achieved by the cutting edge, with the protuberances 7 arranged thereon that exert a slight abrasion on the cutting surfaces themselves, finishing them and polishing them.

According to a different embodiment of the support body 2 (not shown), the faces 3 of the support body 2 each have a slightly concave form, so that the support body 2 has transverse size at the central portion 10 thereof lower than the transverse size at the cutting edge. In particular, the transverse size of the support body 2 at the central portion 10 is reduced by an amount equal to about 1/1000 of the diameter of the support body 2.

Reported hereinbelow are the results of a numeric simulation relative to the distribution of the speed and temperature of the cooling fluid during the operation of a cutter disc of known type (lacking protuberances) and during the operation of the cutter disc 1, object of the present invention.

More in detail, the simulation was executed for a cutter disc of known type comprising a disc-shaped support body made of hard metal, with 80 mm diameter and with smooth lateral faces.

The simulation was also carried out for an embodiment of the present cutter disc 1 having the support body 2 made of a material comprising tungsten carbide with 10% cobalt and having density equal to 14800 kg m⁻³, elasticity modulus equal to 620 GPa, heat expansion coefficient equal to 5.6·10⁻¹ K⁻¹, specific heat equal to 171 J kg⁻¹ K⁻¹, thermal conductivity equal to 93 W m⁻¹ K⁻¹. The diameter of the support body 2 is equal to 80 mm, the height of the protuberances 7 is equal to 0.3 mm and the width of the channels of the network 8 is equal to 1.2 mm.

In addition, the simulation was carried out considering a cooling fluid (emulsifiable oil) having density equal to 900 kg m⁻³, dynamic viscosity equal to 0.0324 Pa s, specific heat equal to 2950 J kg⁻¹ K⁻¹, thermal conductivity equal to 0.113 W m⁻¹ K⁻¹. In particular, the behavior of the cooling fluid was calculated by means of solver of the Navier-Stokes equations.

The simulations were executed considering the operative conditions in which the support body of the cutters is brought to rotate at a speed of 400 rev/min and the cooling fluid is fed with a pressure of 5 bars and a maximum inlet flow rate of 30 liters/min.

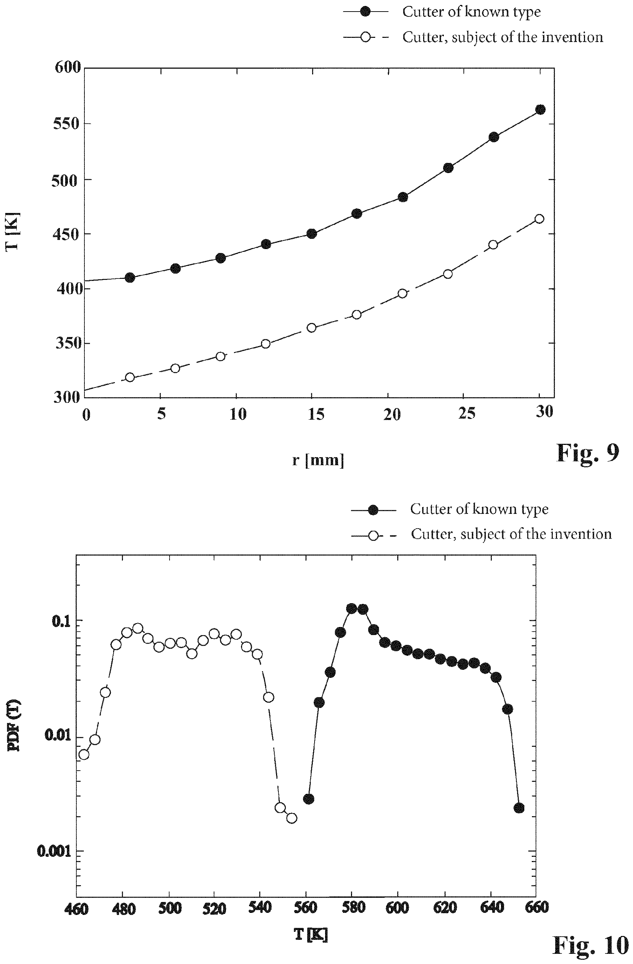

The graph reported in Figure 9 shows the statistical distribution of the average temperature calculated for the cutter of known type and for the present cutter disc 1.

More in detail, the graph of figure 9 shows the evolution of the average temperature of the cooling fluid measured on the faces of the support body of each cutter along the radial extension r of the support body itself in the section comprised between the edge (r = 0 mm) of the through hole of the support body and the tip of the teeth (r = 30 mm).

Such graph of figure 9 clearly shows that the cutter of known type (having the support body with smooth lateral faces) is characterized by average temperature variation intervals (represented with solid line) much higher than those of the present cutter disc 1 (represented with dashed line).

The graph reported in Figure 10 illustrates the statistical distribution of the temperature values of the cooling fluid calculated on the lateral surface of the teeth of each cutter disc.

More in detail, the graph of figure 10 provides indications on the statistical probability (Probability Density Function, PDF) of detecting a certain temperature value (comprised between 460 K and 660 K in the simulated case) at the teeth of each cutter disc. In other words, the values of the Probability Density Function PDF reported on the ordinate of the graph of figure 10 represent, if multiplied by one hundred, the percentage probability of detecting, on the teeth, the corresponding temperature value reported on the abscissas of the graph itself.

As can be detected from the data reported in the graph of figure 10, the cutter disc of known type (whose PDF is represented with solid line) has temperature at the teeth comprised between 560 K and 660 K with a peak of probability of about 15% around 580 K.

Otherwise, the present cutter disc (whose PDF is represented with dashed line) has, at the teeth 6, temperatures which are much lower (comprised between 460 K and 560 K) than those of the cutter of known type, and do not have significant probability peaks.

Therefore, the aforesaid simulations have confirmed that the present cutter disc 1 allows obtaining an improvement of the heat exchange between the support body 2 of the cutter 1 and the cooling fluid with respect to the cutters of known type without protuberances.

Such performance improvements can be ascribed to the presence of the protuberances 7 and the channels of the network 8 according to the invention, which cause an increase of the surface area useful for transferring heat from the support body 2 to the cooling fluid, and also determine an optimal channeling of the cooling fluid towards the teeth 6 of the cutter disc 1, involving a heat exchange between the support body 2 and the cooling fluid, which occurs both via conduction and via convection (while for the cutter disc of known type the heat exchange between the support body and the cooling fluid only occurs via conduction).

Another object of the present invention is a cutting device 100 equipped with at least one cutter disc 1 of the above-described type, with regard to which the same reference numbers will be employed hereinbelow for the sake of descriptive simplicity.

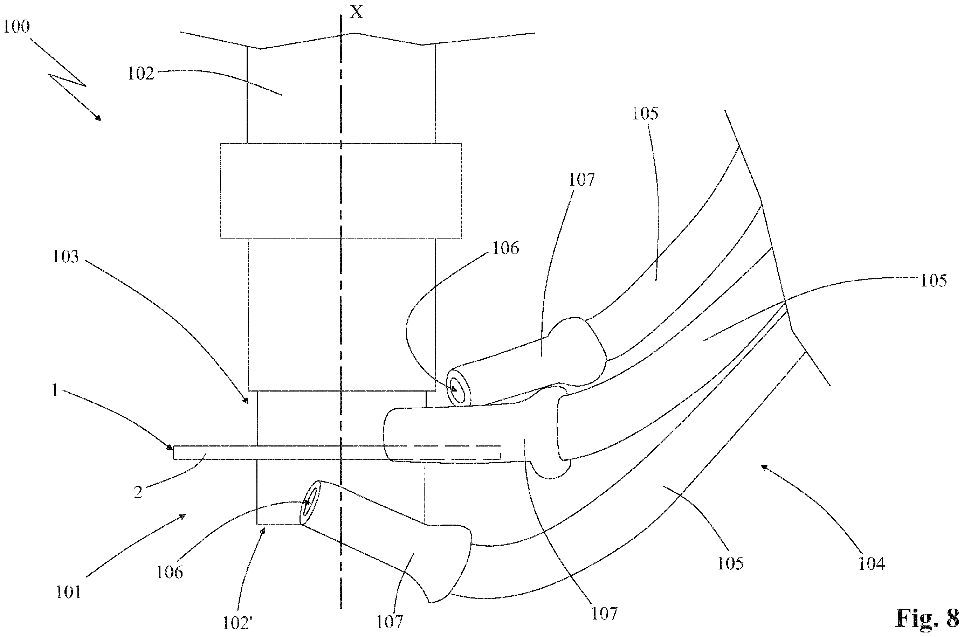

More in detail, with reference to the embodiment illustrated in Figure 8, the cutting device 100 comprises a support frame and at least one operative head 101 equipped with a rotation shaft 102 rotatably constrained to the support frame and extended around an axis X thereof. The cutting device 100 is also equipped with movement means (not illustrated in the enclosed figures), for example comprising an electric motor, mounted on the support frame and mechanically connected to the rotation shaft 102 in order to drive the latter to rotate around the axis X.

In addition, the cutting device 100 comprises at least one cutter disc 1 fixed coaxially to the rotation shaft 102 in particular at a free end 102' of the rotation shaft 102 itself.

Advantageously, the rotation shaft 102 is equipped at the free end 102' thereof with a chuck tool-holder 103 (of type *per se* known to the man skilled in the art and therefore not described in detail hereinbelow), to which the cutter disc 1 is integrally connected.

The cutting device 100 also comprises cooling means 104 mounted on the support frame of the device 100 and comprising at least one or more supply ducts 105, each of which being connected to a cooling fluid source and equipped with a corresponding delivery opening 106 operatively associated with the cutter disc in order to deliver a flow of the cooling fluid on at least one of the faces 3 of the support body 2 of the cutter disc 1 itself.

In particular, with reference to the embodiment illustrated in Figure 8, the supply ducts 105 comprise corresponding spray nozzles 107 arranged around the cutter disc 1 and each equipped with the corresponding delivery opening 106 directed towards the support body 2 of the cutter disc 1 in order to direct the corresponding flow of the cooling fluid on the faces 3 of the support body 2 of the cutter disc 1 itself and in particular towards the teeth 6 of the latter.

Advantageously, the cooling means 104 comprise a hydraulic circuit (not shown), which is fed from the cooling fluid source (e.g. obtained with a containment tank), and is connected to the supply ducts 105 and equipped with a hydraulic pump adapted to convey the cooling fluid to the outlet nozzles 107 with a specific pressure preferably comprised between 3 bars and 13 bars.

Another object of the present invention is a method for obtaining a cutter disc 1, in particular of the above-described type, with regard to which the same reference numbers will be employed.

The method according to the present invention first comprises a step of arranging a powder mixture comprising particles of one or more metal carbides and particles of one or more metal binders for obtaining a so-called hard metal. In particular, the powder mixture advantageously comprises tungsten carbide and possible further metal carbides and cobalt particles, as binder. Also added to the mixture is preferably one or more binder additives adapted to facilitate the pressing of the mixture itself, such as in particular paraffin or a mixture of different types of paraffin. Such binder additives are adapted to facilitate the cohesion of the powders and confer, to the pressed piece, a mechanical strength sufficient to allow the manipulation thereof during the subsequent processing steps.

The process also provides for a step of arranging a matrix and a counter-matrix of a mold, one or both of which are provided with a substantially disc-shaped containment chamber delimited by a bottom and perimetrically by a lateral wall, and with a central pin that extends in relief from the bottom. Both the matrix and the counter-matrix are also provided with a substantially disc-shaped molding surface; on at least one annular portion of such surface, a plurality of recessed bosses are obtained that are separated by a network of raised ribs. The molding surfaces of the matrix and the counter-matrix are able to be arranged opposite from one another when the matrix and the counter-matrix are brought together for the molding. The molding surface of the matrix and/or the counter-matrix provided with a containment chamber is defined by the bottom of the containment chamber itself.

Then, step is provided for introducing a dose of the powder mixture into the containment chamber of the matrix or counter-matrix.

During a subsequent step of pressing the dose of the powder mixture, the matrix and the counter-matrix are brought together to exert a compression stress on the dose of the powder mixture and obtain a pressed support body for a cutter disc 1. During such pressing step, the pin is suitable for creating the central through hole 5 in the pressed support body, and the bosses and the network of raised ribs are respectively adapted to create the protuberances and the recessed network of channels on the two faces of the pressed support body.

Subsequently, step is provided for pressure-assisted sintering of the pressed support body, during which the pressed support body is heated to a sintering temperature close to the melting temperature of the metal binder (or of the metal binders) and is subjected, advantageously in inert atmosphere, to a sintering pressure, preferably comprised between 30 and 60 bars, so that the metal binder (i.e. the metal binders), being sintered, binds the particles of the metal carbides, obtaining a sintered support body 2.

Advantageously the sintering step is preceded by a pre-sintering step during which the pressed support body is subjected to high vacuum and heated to temperatures greater than the evaporation temperature of the binder additives to remove the latter from the pressed support body itself.

Preferably, the pre-sintering step and the sintering step are conducted in a single thermal cycle, inside a suitable sintering furnace.

More in detail, the pressed support body arranged in the aforesaid sintering furnace is first subjected to high vacuum and heated until the sintering temperature is reached. During such heating, the binder additives added to the mixture evaporate and thus they are extracted from the pressed support body, leaving the corresponding interstices in the latter.

The pressed support body is maintained at the sintering temperature for a time interval on the order of some tens of minutes, preferably for about an hour, sufficient for allowing the particles of the metal binders to be joined via coalescence and to occupy the interstices left in the pressed support body by the evaporated binder additives.

Also injected in the sintering furnace is an insert gas, such as argon, or a mixture of inert gases, in order to increase the pressure inside the furnace itself until the sintering pressure is attained and to create a non-oxidizing atmosphere within the furnace.

The sintered support body is then cooled inside the sintering furnace itself, and then in inert atmosphere, until a temperature is attained that is slightly greater than the ambient temperature, e.g. about 50°C, with the simultaneous decrease of the pressure inside the furnace itself.

In particular, if the metal binder present in the powder mixture is cobalt, the sintering step provides for the heating of the pressed support body to temperatures around 1450 °C.

In particular, during the pre-sintering step, the support body 2 is generally affected by shrinkage phenomena due to the evaporation of the binder additives; such shrinkage phenomena nevertheless do not substantially alter the geometric characteristics of the support body 2 and its faces 3.

Advantageously, the sintered support body 2 is subjected to one or more grinding steps during which its central through hole 5 and its faces 3 are ground. In particular, with regard to the grinding of the faces 3 of the support body 2, a first grinding step by means of the use of a coarse grain grindstone to reduce the thickness of the support body 2, if necessary, and a second grinding step by means of the use of a grindstone with fine grain, to finish the faces 3 and reduce the surface roughness thereof, can be provided for.

Then, a step is provided for profile-making the sintered support body 2, during which a plurality of teeth 6 are obtained along the outer perimeter edge 4 of the support body 2 itself, in particular by means of the use of a diamond grindstone.

The sintered support body 2 obtained by means of the process described above and having the previously described form characteristics does not have a preferred rotation sense, so that the teeth 6 can be obtained along its outer perimeter with any orientation. This facilitates the production process, making it simpler and quicker with respect to the processes of production of cutter discs provided with curved radial grooves, whose support bodies have a preferred rotation direction, and therefore limiting the creation of discard pieces.

Therefore, the above-described process allows obtaining, in a simple and quick manner, a cutter disc 1 having the previously specified form characteristics, which confer to the same the particular characteristics of efficiency and durability listed above.

The finding thus conceived therefore achieves the pre-established objects.

## Claims

1. Cutter disc comprising:
- a disc-shaped support body (2), equipped with two faces (3) delimited peripherally by an outer perimeter edge (4) and centrally by a through hole (5) for coupling with a chuck of a tool-holder; and
- a plurality of teeth (6) distributed along said outer perimeter edge (4); wherein each of the faces (3) of said support body (2) comprises at least one intermediate area having a plurality of discrete protuberances (7) distributed radially and circumferentially and separated from one another by a recessed network (8) of intercommunicating channels which can guide a cooling fluid released on the faces (3) of said support body (2) towards the teeth (6) of said cutter (1), said cooling fluid being able to substantially reach each of the teeth (6) of said cutter (1) regardless of the number and distribution of said teeth (6) along said outer perimeter edge (4),
**characterised in that** the protuberances (7) are integral with the support body (2) and are made of the same material as said support body (2).

2. Cutter disc according to claim 1, **characterized in that** said protuberances (7) are arranged offset from one another along radial directions to deviate and slow down the flow of said cooling fluid along radial directions, increasing the time that said cooling fluid stays on the faces (3) of said support body (2).

3. Cutter disc according to claim 2, **characterized in that** said protuberances (7), due to their arrangement on said faces (3), are able to guide said cooling fluid in said network (8) with a path (9) having a plurality of sections (9') with at least one tangential component (9ₜ) and a plurality of sections (9") with at least one radial component (9ᵣ).

4. Cutter disc according to claim 2 or 3, **characterized in that** said at least one intermediate area of each of the faces (3) of said support body (2) comprises, along a generic radial direction, a plurality of protuberances (7) offset from one another, so that during the rotation of said cutter disc (1) said cooling fluid, moving under the action of a centrifugal force along said network (8), encounters a plurality of protuberances (7), so as to define a winding path.

5. Cutter disc according to any one of the previous claims, **characterized in that** each of said teeth (6) is equipped, on lateral surfaces thereof, with a plurality of said protuberances (7) so that the position of said tooth (6) with respect to said protuberances (7) is substantially unimportant for the distribution of said cooling fluid.

6. Cutter disc according to any one of the previous claims, **characterized in that** said protuberances (7) occupy a percentage comprised between 35% and 45% of the extension of said at least one intermediate area of each of the faces (3) of said support body (2), the remaining percentage comprised between 55% and 65% being occupied by said network (8) of channels.

7. Cutter disc according to any one of the previous claims, **characterized in that** each of said protuberances (7) extends from the bottom of the channels of said network (8) along a direction substantially perpendicular to said bottom, tapering off.

8. Cutter disc according to any one of the previous claims, **characterized in that** each of the faces (3) of said support body (2) is equipped with a peripheral portion (11) that extends from said outer perimeter edge (4) up to said intermediate area, said peripheral portion (11) being substantially smooth.

9. Cutter disc according to any one of the previous claims, **characterized in that** the faces (3) of said support body (2) both extend substantially parallel to a reference plane (π).

10. Cutting device (100), which comprises:
- a support frame;
- at least one operative head (101), which is equipped with a rotation shaft (102) rotatably mounted on said support frame and extended along an axis (X) thereof;
- movement means mounted on said support frame and mechanically connected to said rotation shaft (102) in order to drive said rotation shaft (102) to rotate around said axis (X);
said cutting device (100) being **characterized in that** it also comprises:
- a cutter disc (1) according to any one of the preceding claims fixed coaxially with said rotation shaft (102);
- cooling means (104) mounted on said support frame and comprising at least one supply duct (105), which is connected to a cooling fluid source and is equipped with at least one delivery opening (106) adapted to deliver a flow of said cooling fluid on at least one of the faces (3) of the support body (2) of said cutter disc (1).

11. Method for making a cutter disc according to any one of 1 to 9,
comprising the following operative steps:
- a step of arranging a powder mixture comprising particles of at least one metallic carbide and particles of at least one metal binder;
- a step of arranging a matrix and a counter-matrix of a mold, at least one of which is provided with a substantially disc-shaped containment chamber delimited by a bottom and perimetrically by a wall and with a central pin that extends in relief from said bottom, both said matrix and said counter-matrix being provided with a substantially disc-shaped molding surface on at least one annular portion of which a plurality of recessed bosses are obtained that are separated by a network of raised ribs, the molding surfaces of said matrix and of said counter-matrix being able to be arranged opposite when said matrix and said counter-matrix are brought together for molding and the molding surface of said at least one from said matrix and said counter-matrix provided with a containment chamber being defined by the bottom of said containment chamber;
- a step of introducing a dose of said powder mixture into said containment chamber of at least one from said matrix and said counter-matrix;
- a step of pressing said dose of the powder mixture during which said matrix and said counter-matrix are brought together to exert a compression stress on said dose of the powder mixture and obtain a support body for a cutter disc (1) that is pressed, said pin being suitable for creating a central through hole in said pressed support body, and said bosses and said network of ribs being suitable for creating protuberances and a recessed network of channels, respectively, on the two faces of said pressed support body;
- a step of sintering said pressed support body, during which said pressed support body is heated to a sintering temperature close to the melting temperature of said at least one metal binder and is subjected to a sintering pressure, so that said metal binder, by sintering, binds said particles of at least one metal carbide, obtaining a sintered support body (2);
- a step of profile-forming said sintered support body (2), during which a plurality of teeth (6) are obtained along the outer perimeter edge (4) of said support body (2).

## Patentansprüche

1. Trennscheibe, die Folgendes umfasst:
- einen scheibenförmigen, mit zwei auf ihrem Umfang von einem umlaufenden Außenrand (4) begrenzten Flächen (3) und in der Mitte mit einer durchgehenden Öffnung (5) zur Verbindung mit der Spindel eines Werkzeugträgers ausgestatteten Trägerkörper (2); und
- eine Vielzahl von entlang des genannten umlaufenden Außenrands (4) verteilten Zähnen (6);
bei der jede der Flächen (3) des genannten Trägerkörpers (2) mindestens einen Zwischenbereich mit einer Vielzahl an inselförmig radial und auf dem Umfang verteilten und durch eine vertiefte Vernetzung (8) von miteinander verbundenen Kanälen voneinander getrennten Vorsprüngen (7) aufweist, die geeignet ist, eine auf die Flächen (3) des genannten Trägerkörpers (2) wirkende Kühlflüssigkeit in Richtung der Zähne (6) der genannten Trennscheibe (1) zu leiten, wobei die genannte Kühlflüssigkeit geeignet ist, im Wesentlichen unabhängig von der Anzahl und der Verteilung der genannten Zähne (6) entlang des umlaufenden Außenrands (4) jeden der Zähne (6) der genannten Fräse (1) zu erreichen,
**dadurch gekennzeichnet, dass** die Vorsprünge (7) eine Einheit mit dem Trägerkörper (2) bilden und aus demselben Werkstoff des genannten Trägerkörpers (2) bestehen.

2. Trennscheibe nach Anspruch 1, **dadurch gekennzeichnet, dass** die genannten Vorsprünge (7) zueinander entlang radialen Richtungen versetzt angeordnet sind, um das Fließen der genannten Kühlflüssigkeit entlang radialer Richtungen abzulenken und zu verlangsamen und die Verweilzeit der genannten Kühlflüssigkeit auf den Flächen (3) des genannten Trägerkörpers (2) zu verlängern.

3. Trennscheibe nach Anspruch 2, **dadurch gekennzeichnet, dass** die genannten Vorsprünge (7) dank ihrer Anordnung auf den genannten Flächen (3) geeignet sind, die genannte Kühlflüssigkeit in die genannte Vernetzung (8) über einen Verlauf (9) mit einer Vielzahl von Abschnitten (9') mit mindestens einer Tangentialkomponente (9ₜ) und einer Vielzahl von Abschnitten (9") mit mindestens einer Radialkomponente (9ᵣ) zu leiten.

4. Trennscheibe nach Anspruch 2 oder 3, **dadurch gekennzeichnet, dass** der genannte mindestens eine Zwischenbereich jeder der Flächen (3) des genannten Trägerkörpers (2) entlang einer allgemeinen radialen Richtung eine Vielzahl von zueinander versetzten Vorsprüngen (7) umfasst, so dass während der Drehung der genannten Trennscheibe (1) die sich unter der Wirkung einer Zentrifugalkraft entlang der genannten Vernetzung (8) bewegende genannte Kühlflüssigkeit auf eine Vielzahl von Vorsprüngen (7) trifft und so eine gewundene Strecke definiert wird.

5. Trennscheibe nach einem beliebigen der vorangegangenen Ansprüche, **dadurch gekennzeichnet, dass** jeder der genannten Zähne (6) auf seinen Seitenflächen mit einer Vielzahl der genannten Vorsprünge (7) ausgestattet ist, so dass die Position des genannten Zahns (6) im Verhältnis zu den genannten Vorsprüngen (7) im Wesentlichen für die Verteilung der genannten Kühlflüssigkeit unwichtig ist.

6. Trennscheibe nach einem beliebigen der vorangegangenen Ansprüche, **dadurch gekennzeichnet**, das die genannten Vorsprünge (7) zwischen 35 % und 45 % der Fläche des genannten mindestens einen Zwischenbereichs jeder der Flächen (3) des genannten Trägerkörpers (2) einnehmen, wobei die verbleibende Fläche zwischen 55 % und 65 % ausmacht und von der genannten Vernetzung (8) von Kanälen eingenommen wird.

7. Trennscheibe nach einem beliebigen der vorangegangenen Ansprüche, **dadurch gekennzeichnet, dass** jeder der genannten Vorsprünge (7) ausgehend vom Boden der Kanäle der genannten Vernetzung (8) entlang einer im Wesentlichen zu dem genannten Boden rechtwinkligen Richtung verläuft und sich dabei verjüngt.

8. Trennscheibe nach einem beliebigen der vorangegangenen Ansprüche, **dadurch gekennzeichnet, dass** jede der Flächen (3) des genannten Trägerkörpers (2) mit einem umlaufenden Abschnitt (11) ausgestattet ist, der ausgehend von dem umlaufenden Außenrand (4) bis zu dem genannten Zwischenbereich verläuft, dessen Außenabschnitt (11) im Wesentlichen glatt ist.

9. Trennscheibe nach einem beliebigen der vorangegangenen Ansprüche, **dadurch gekennzeichnet, dass** die Flächen (3) des genannten Trägerkörpers (2) beide im Wesentlichen parallel zu einer Bezugsfläche (n) verlaufen.

10. Trennvorrichtung (100), die Folgendes umfasst:
- einen Trägerrahmen;
- mindestens einen Arbeitskopf (101), der mit einer drehbar auf dem genannten Trägerrahmen montierten Drehwelle (102) ausgestattet ist, die ihrer Achse (X) entlang verläuft;
- auf dem genannten Trägerrahmen montierte und mechanisch mit der genannten Drehwelle (102) verbundene Bewegungselemente, um die genannten Drehwelle (102) um die genannte Achse (X) in Drehung zu versetzen;
wobei die genannte Trennvorrichtung (100) **dadurch gekennzeichnet ist, dass** sie außerdem Folgendes umfasst:
- eine Trennscheibe (1) nach einem beliebigen der vorangegangenen Ansprüche, die koaxial auf der genannten Drehwelle (102) angebracht ist;
- auf dem genannten Trägerrahmen montierte Kühlvorrichtungen (104), die mindestens eine Zuleitung (105) umfassen, die an eine Quelle der Kühlflüssigkeit angeschlossen und mit mindestens einer Ausgabeöffnung (106) ausgestattet ist, die geeignet ist, einen Fluss der genannten Kühlflüssigkeit auf mindestens eine der Flächen (3) des Trägerkörpers (2) der genannten Trennscheibe (1) zu leiten.

11. Verfahren zur Herstellung einer Trennscheibe nach einem beliebigen der Ansprüche 1 bis 9, das die folgenden Schritte umfasst:
- einen Schritt der Vorbereitung einer Partikel mindestens eines Metallkarbids und Partikel mindestens eines Metallbindemittels enthaltenden Pulvermischung;
- einen Schritt der Vorbereitung eines Gesenks und eines Gegengesenks einer Form, von denen mindestens eines mit einer Aufnahmekammer mit im Wesentlichen scheibenförmiger Auslegung, die von einem Boden und umlaufend von einer Wand begrenzt wird, und mit einem zentralen Dorn ausgestattet ist, der von dem genannten Boden aus vorstehend verläuft, wobei das genannte Gesenk und das genannte Gegengesenk mit einer Formfläche mit im Wesentlichen scheibenförmiger Auslegung auf wenigstens einem ringförmigen Abschnitt ausgestattet sind, auf der eine Vielzahl von durch eine Vernetzung von erhobenen Aderungen getrennte vertiefte Buckel angebracht sind, wobei die Formflächen des genannten Gesenkes und des genannten Gegengesenks geeignet sind, gegenüberliegend angeordnet zu werden, wenn das genannte Gesenk und das genannte Gegengesenk zum Formen aneinander angenähert werden und die Formfläche des genannten mindestens einen Gesenks und des genannten mit einer Aufnahmekammer versehenen Gegengesenks vom Boden der genannten Aufnahmekammer definiert wird;
- einen Schritt des Einfüllens einer Dosis der genannten Pulvermischung in die genannte Aufnahmekammer des mindestens eines genannten Gesenks oder Gegengesenks;
- einen Schritt des Pressens der Pulvermischung, während dem das genannte Gesenk und das genannte Gegengesenk aneinander angenähert werden, um eine Druckbeanspruchung auf die genannte Dosis der Pulvermischung auszuüben und einen Trägerkörper für eine gepresste Trennscheibe (1) zu erzielen, wobei der genannte Dorn in der Lage ist, eine durchgehende mittlere Öffnung in dem genannten gepressten Trägerkörper zu erzeugen und die genannten Buckel und die genannte Vernetzung von Aderungen geeignet sind, jeweils Vorsprünge und eine vertiefte Vernetzung von Kanälen auf den beiden Flächen des gepressten Trägerkörpers zu erzielen;
- einen Schritt der Sinterung des genannten gepressten Trägerkörpers, während der der genannte gepresste Trägerkörper auf eine Sinterungstemperatur nahe der Schmelztemperatur des genannten mindestens einen Metallbindemittels erwärmt und einem Sinterungsdruck ausgesetzt wird, damit das genannte Metallbindemittel bei seinem Sinterungsvorgang die genannten Partikel mindestens eines Metallkarbids zementiert und so einen gesinterten Trägerkörper (2) ergibt;
- einen Schritt des Profilierens des genannten gesinterten Trägerkörpers (2), während dem eine Vielzahl an Zähnen (6) entlang dem umlaufenden Außenrand (4) des genannten Trägerkörpers (2) entsteht.

## Revendications

1. Disque de coupage comprenant :
- un corps de support (2) de forme discoïdale dotée de deux faces (3) délimitées en périphérie par un bord périmétral externe (4) et au centre par un trou de passage (5) pour le rattachement au mandrin d'un porte-outils ;
et
- plusieurs dents (6) distribuées le long dudit bord périmétral externe (4) ;
dans lequel chacune des faces (3) dudit corps de support (2) comprend au moins une zone intermédiaire ayant plusieurs protubérances (7) en îlots distribuées dans le sens radial et dans celui de la circonférence et séparées entre elles par un réseau (8) de canaux creusés communiquant entre eux et susceptibles de diriger un fluide réfrigérant parvenant sur les faces (3) dudit corps de support (2) vers les dents (6) du disque de coupe (1), ledit fluide réfrigérant étant susceptible d'atteindre en substance chacune des dents (6) dudit disque de coupe (1), indépendamment du nombre et de la distribution desdites dents (6) le long du bord périmétral externe (4),
**caractérisé en ce que** les protubérances (7) forment un bloc unique avec le corps de support (2) et sont faites du même matériau du corps de support (2) en question.

2. Disque de coupage selon la revendication 1, **caractérisé en ce que** ces protubérances (7) sont disposées entre elles et arrangées dans le sens radial pour dévier et ralentir l'écoulement dudit fluide réfrigérant dans les directions radiales, de sorte à augmenter le temps de permanence dudit fluide réfrigérant sur les faces (3) du corps de support (2) susmentionné.

3. Disque de coupage selon la revendication 2, **caractérisé en ce que** lesdites protubérances (7), en raison de leur disposition sur lesdites faces (3) sont à même de guider ledit fluide réfrigérant dans la réticulation (8) en suivant un parcours (9) ayant plusieurs segments (9') avec au moins une composante tangentielle (9ₜ) et plusieurs segments (9") avec au moins une composante radiale (9ᵣ).

4. Disque de coupage selon la revendication 2 ou 3, **caractérisé en ce que** ladite au moins une zone intermédiaire de chacune des faces (3) dudit corps de support (2) comprend, le long d'une direction générale radiale, plusieurs protubérances (7) arrangées entre elles de sorte que, pendant la rotation de ce disque de coupage (1), ledit fluide réfrigérant, en se déplaçant sous l'action d'une force centrifuge le long de ladite réticulation (8), rencontre plusieurs protubérances (7) de façon à définir un parcours tortueux.

5. Disque de coupage selon l'une quelconque des revendications précédentes **caractérisé en ce que** chacune des dents (6) est dotée, sur ses surfaces latérales, de plusieurs desdites protubérances (7), de sorte que la position de ladite dent (6) par rapport à ladite protubérance (7) est essentiellement indifférente à la distribution dudit fluide réfrigérant.

6. Disque de coupage selon l'une quelconque des revendications précédentes **caractérisé en ce que** lesdites protubérances (7) occupent un pourcentage compris entre 35 et 45 % de l'extension de ladite au moins une zone intermédiaire de chacune des faces (3) dudit corps de support (2), le pourcentage restant compris entre 55 et 65 % étant occupé par la réticulation (8) de canaux.

7. Disque de coupage selon l'une quelconque des revendications précédentes, **caractérisé en ce que** chacune desdites protubérances (7) s'étend à partir du fond des canaux de ladite réticulation (8) selon une direction essentiellement orthogonale audit fond, en se réduisant au fur et à mesure.

8. Disque de coupage selon l'une ou l'autre des revendications, **caractérisé en ce que** chacune des faces (3) dudit corps de support (2) est doté d'une partie périphérique (11) qui s'étend dudit bord périmétral externe (4) jusqu'à la zone intermédiaire, la partie périphérique (11) en question étant essentiellement lisse.

9. Disque de coupage selon l'une ou l'autre des revendications précédentes, **caractérisé en ce que** les faces (3) dudit corps de support (2) s'étendent toutes deux dans une direction essentiellement parallèle à un plan de référence (n).

10. Dispositif de coupe (100) comprenant :
- un châssis de support ;
- au moins une tête opérationnelle (101) dotée d'un arbre de rotation (102) monté en rotation sur le châssis de support susmentionné et s'étendant le long de son axe (X) ;
- des moyens de déplacement montés sur ledit châssis de support et mécaniquement raccordés audit arbre de rotation (102) afin d'actionner l'arbre de rotation (102) en question et de le faire tourner autour de l'axe (X) ;
ledit dispositif de coupe (100) étant de plus **caractérisé en ce qu'**il comporte :
- un disque de coupage (1) selon l'une quelconque des revendications précédentes fixées de façon coaxiale audit arbre de rotation (102) ;
- des moyens de refroidissement (104) montés sur ledit châssis de support et comprenant au moins un conduit d'alimentation (105) raccordé à une source de fluide réfrigérant, doté d'au moins une ouverture de distribution (106) propre à distribuer un flux dudit fluide réfrigérant sur au moins une des faces (3) du corps de support (2) dudit disque de coupage (1).

11. Procédé pour la réalisation d'un disque de coupage selon l'une quelconque des revendications de 1 à 9 comprenant les phases opératoires suivantes :
- une phase de préparation d'un mélange en poudre comprenant des particules d'au moins un carbure métallique et des particules d'au moins un liant métallique ;
- une phase de préparation d'une matrice et d'une contre-matrice d'un moule, dont au moins une est dotée d'une chambre de confinement de forme essentiellement discoïdale délimitée par une fonds et, sur son pourtour, par une paroi et un axe central qui s'étend en relief à partir dudit fond, la matrice et la contre-matrice en question étant toutes deux dotées d'une surface de moulage de forme essentiellement discoïdale sur au moins une partie annulaire dans laquelle sont obtenus plusieurs bossages séparés par un réseau de nervures en relief, les surfaces de moulage de ladite matrice et de ladite contre-matrice étant susceptibles d'être opposées l'une à l'autre lorsque la matrice et la contre-matrice en question sont rapprochées aux fins du moulage, et la surface de moulage de l'une ou l'autre de ladite matrice ou contre-matrice dotée d'une chambre de confinement étant délimitée par le fonds de la chambre de confinement en question ;
- une phase d'introduction d'une dose dudit mélange en poudre dans la chambre de confinement susmentionnée d'au moins une entre ladite matrice et ladite contre-matrice ;
- une phase de pressage de ladite dose de mélange en poudre pendant laquelle ladite matrice ou ladite contre-matrice sont rapprochées l'une de l'autre pour exercer une force de compression sur la dote de mélange en poudre et obtenir ainsi un corps de support pour un disque de coupage (1) pressé, l'axe étant propre à créer un trou de passage central dans ledit corps de support pressé, et les bossages ainsi que le réseau de nervures étant capables de produire respectivement des protubérances et un réseau de canaux en creux sur les deux faces du corps de support pressé susmentionné ;
- une phase de frittage dudit corps de support pressé pendant laquelle le corps de support pressé est réchauffé à une température de frittage se rapprochant de la température de fusion d'au moins un liant métallique et est soumis à une pression de frittage afin que ledit liant métallique, en se frittant, cimente lesdites particules d'au moins un carbure métallique, en obtenant un corps de support (2) fritté ;
- une phase de profilage dudit corps de support (2) fritté durant laquelle plusieurs dents (6) sont formées le long du bord périmétral externe (4) dudit corps de support (2).
